# EUROPÄISCHE PATENTSCHRIFT

(11) **EP 1 206 361 B1**
(45) Veröffentlichungstag und Bekanntmachung des Hinweises auf die Patenterteilung: **21.04.2004**
(21) Anmeldenummer: 00958319.6
(22) Anmeldetag: 28.07.2000
(51) Int. Cl.: B60J 7/057, B60J 7/22

(54) **VERFAHREN UND VORRICHTUNG ZUR AUTOMATISCHEN VERÄNDERUNG EINER ÖFFNUNG IN DER AUSSENHAUT EINER FAHRZEUGKABINE**
METHOD AND DEVICE FOR AUTOMATICALLY ADJUSTING AN OPENING IN THE SKIN OF A VEHICLE COMPARTMENT
PROCEDE ET DISPOSITIF POUR MODIFIER AUTOMATIQUEMENT UNE OUVERTURE DANS LE REVETEMENT EXTERIEUR D'UNE CABINE DE VEHICULE

(30) Priorität: 07.08.1999 DE 19937458; 07.08.1999 DE 19937459
(43) Veröffentlichungstag der Anmeldung: 22.05.2002
(73) Patentinhaber: Volkswagen Aktiengesellschaft, 38436 Wolfsburg (DE)
(72) Erfinder: ELTNER, Reinhard, D-38116 Braunschweig (DE); MACIEJEWSKI, Bernhard, D-38518 Gifhorn (DE); DRESCHER, Thomas, D-38518 Gifhorn (DE); HASS, Christian, D-38477 Jembke (DE); DRECHSLER, Gerhard, D-08124 Cainsdorf (DE)
(86) Internationale Anmeldenummer: PCT/EP2000/007333
(87) Internationale Veröffentlichungsnummer: WO 2001/010660

(56) Entgegenhaltungen:
- EP-A- 0 916 536
- DE-A- 3 512 117
- DE-A- 19 750 188

## Beschreibung

Die Erfindung betrifft ein Verfahren zur automatischen Veränderung einer Öffnung in der Außenhaut einer Fahrzeugkabine, insbesondere einer Öffnung im Dachbereich eines Kraftfahrzeuges, wobei die Veränderung der Öffnung in Abhängigkeit zumindest eines im wesentlichen die Fahrgeschwindigkeit repräsentierenden Meßsignals erfolgt, die Größe der Öffnung verändert wird, zumindest ein Fahrgeschwindigkeitsschwellwert vorgesehen ist, in dessen Abhängigkeit eine unterschiedliche Größe der Öffnung eingestellt wird.

Des weiteren betrifft die Erfindung eine Vorrichtung zur automatischen Veränderung einer Öffnung in der Außenhaut einer Fahrzeugkabine, insbesondere einer Öffnung im Dachbereich eines Fahrzeuges, mit einer Antriebsvorrichtung für eine Abdeckung und/oder mit einer Antriebseinrichtung für einen Windabweiser zum Verändern der Öffnung und mit mindestens einer Steuereinrichtung zur Erzeugung zumindest einer Stellgröße (Iₛₜₑₗₗ) für mindestens eine Antriebseinrichtung.

Es ist allgemeine Erkenntnis, daß an Dachöffnungen von Fahrzeugen sich im Fahrbetrieb, besonders bei weit oder ganz geöffnetem Dachfenster, niederfrequente Luftschwingungen ausbilden. Bei bestimmten Fahrgeschwindigkeiten wirkt der Fahrzeuginnenraum zusammen mit der überströmten Dachöffnung als Resonator, so daß die Luftschwingungen eine beträchtliche Intensität entwickeln können und sich für die Fahrzeuginsassen sehr störend auswirken. Derartige Schwingungen werden als sogenannte Wummergeräusche bezeichnet.

Unter Beachtung dieser Erkenntnis wurde bereits vorgeschlagen, an der Vorderseite derartiger Dachöffnungen Windabweiser anzubringen, die die Störgeräusche im Fahrzeuginneren verringern sollen.

Eine solche Anordnung beschreibt die DE 39 22 940 C 1, bei der ein um eine Achse parallel zur Vorderkante der jeweiligen Dachöffnung ausschwenkbarer starrer, blattförmiger Windabweiserkörper mit einer Ausschwenkvorrichtung versehen ist, die ein selbsttätiges Ausschwenken des Windabweiserkörpers beim Öffnen eines die Dachöffnung schließenden Deckels bewirkt.

In Erweiterung dieser Lösung wurde in der DE 195 20 752 C 1 eine Windabweiseranordnung beschrieben, welche ab einer vorgegebenen Fahrzeuggeschwindigkeit in seiner Gesamtheit oder in Teilen die entsprechende Dachöffnung periodisch bewegt. Dabei weist der Windabweiserkörper, z. B. ein vom Fahrtwind zu Schwingungen erregbares Schwingungselement auf, das aus einem vorgespannten Gummiband besteht oder als Leiste ausgeführt ist, welche mit bestimmten Federn an Halteelementen befestigt ist. In einer alternativen Ausgestaltung wird beschrieben, daß dieser Windabweiserkörper als ein drehbares Rotationselement ausgebildet ist, welches beispielsweise als Leiste mit ellipsenförmigem Querschnitt ausgebildet ist, wobei ausgeführt wird, daß diese Ausführungsform es gestattet, eine effiziente Störgeräuschunterdrückung bereits mit einer sehr geringen Anstellhöhe zu erzielen.

Des weiteren wird noch auf die DE 196 33 188 C 1 verwiesen, welche eine Einrichtung zum Verändern einer eingestellten Größe einer durchströmbaren Öffnung in einem fahrtwindbeaufschlagten Bereich der Außenhaut der Fahrzeugkabine eines Kraftfahrzeuges beschreibt, welche mit einem in der Nähe der Dachöffnung vorgesehenen Geräuschsensor ausgebildet ist, welcher die jeweils vorhandenen Fahrgeräusche in diesem Bereich erfaßt und auf einen Steuergrößen-Generator einwirkt und daraus ableitend die Stellwerte für einen Stellmotor zum Verändern der Öffnungsgröße von Dachfenstern aktiviert.

In der gattungsbildenden DE 197 50 188 A1 ist ein Verfahren zur Steuerung eines elektrischen Schiebedachs in einem Kraftfahrzeug dargestellt, wobei das elektrische Schiebedach über ein Bedienelement oder ein externes Signal betätigt wird. Als externes Signal soll der eingehende Anruf für ein Autotelefon beziehungsweise das Abheben des Hörers des Autotelefons dienen. Femer wird in der DE 197 50 188 A1 beschrieben, dass die Steuerung des elektrischen Schiebedachs in Abhängigkeit von der Fahrzeuggeschwindigkeit erfolgt. Hierzu wird ein fest vorgegebener Grenzwert als Schwelle für die Ansteuerung des elektrischen Schiebedachs vorgesehen. Überschreitet die Fahrgeschwindigkeit den vorgegebenen Grenzwert, wird das Schiebedach vollständig geschlossen.

Es ist daher die Aufgabe der vorliegenden Erfindung, ein Verfahren und eine Vorrichtung zur Veränderung einer Öffnung in der Außenhaut einer Fahrzeugkabine zu schaffen, die unabhängig von der Ausgestaltung der Öffnung einsetzbar, auf einfache Weise realisierbar sind und den Fahrkomfort wesentlich verbessern.

Die Aufgabe wird durch ein Verfahren mit den Merkmalen des Patentanspruchs 1 und eine Vorrichtung mit den Merkmalen des Patentanspruchs 14 gelöst. Vorteilhafte Ausund Weiterbildungen sind in den Unteransprüchen dargestellt.

Unter der Veränderung der Öffnung sind dabei alle strömungstechnischen Eingriffe, nicht nur in der Veränderung der Geometrie der Öffnung selbst, sondern auch in ihren Randbereichen, insbesondere auch durch die Veränderung der Stellung eines in der Nähe der Öffnung vorgesehenen Windabweisers zu verstehen.

Das erfindungsgemäße Verfahren sieht es vor, dass für die Beschleunigungs- und Verzögerungsvorgänge des Kraftfahrzeuges unterschiedliche Fahrgeschwindigkeitsschwellwerte vorgesehen sind. Somit wird ein ständiges Öffnen und Schließen der Öffnung des Kraftfahrzeuges bzw. eine ständige Veränderung anderer strömungstechnischer Eingriffe bei Veränderungen von Fahrgeschwindigkeiten ausgeschlossen.

So kann gemäß einer Ausbildung der Erfindung in der Beschleunigungsphase eines Kraftfahrzeuges ein erster Fahrgeschwindigkeitsschwellwert festgelegt sein, bis zu dessen Erreichen die Kraftfahrzeugöffnung vollständig geöffnet ist bzw. der Windabweiser eine erste Stellung einnimmt. Wird der erste Fahrgeschwindigkeitsschwellwert überschritten, wird die Öffnung zumindest teilweise geschlossen und/oder der Windabweiser nimmt eine zweite Stellung ein. Wird außerdem ein zweiter Fahrgeschwindigkeitsschwellwert, der über dem ersten Fahrgeschwindigkeitsschwellwert liegt, erreicht bzw. überschritten, wird die Kraftfahrzeugöffnung wieder vollständig geöffnet und/oder der Windabweiser nimmt seine erste Stellung wieder ein.

Für die Verzögerungsphasen des Kraftfahrzeuges ist ein dritter Fahrgeschwindigkeitsschwellwert vorgesehen, der vorzugsweise unterhalb des zweiten Fahrgeschwindigkeitsschwellwertes liegt und bei dessen Erreichen bzw. Unterschreiten, die Öffnung zumindest teilweise geschlossen wird und/oder der Windabweiser eine andere Stellung einnimmt.

Zusätzlich kann in einer Weiterbildung der Erfindung ein vierter Fahrgeschwindigkeitsschwellwert vorgesehen werden, der unterhalb des dritten Fahrgeschwindigkeitsschwellwertes liegt. Bei Erreichen bzw. Unterschreiten dieses Schwellwertes wird in einer Verzögerungsphase die Kraftfahrzeugöffnung wieder vollständig geöffnet und/oder der Windabweiser in die erste Stellung gebracht.

Ein weiterer Grundgedanke der vorliegenden Erfindung ist es, zur Vermeidung bzw. zur Minimierung der Wummergeräusche die Veränderung der Öffnung in Abhängigkeit von in der Fahrzeugkabine, insbesondere in der Nähe der fahrtwindbeaufschlagten Öffnung, auftretender Druckdifferenzen zu steuern.

Gemäß einer bevorzugten Weiterbildung dieses Grundgedankens ist vorgesehen, daß wenigstens ein Schwellwert für die Druckdifferenz bzw. -schwankung vorgesehen ist, mit welchen der in der Fahrzeugkabine ermittelten Druckdifferenz verglichen wird, wobei in Abhängigkeit des Vergleiches die Veränderung der Öffnung erfolgt.

Um ein ständiges Öffnen und Schließen der Öffnung des Kraftfahrzeuges bei auftretenden Druckschwankungen auszuschließen, ist gemäß einer weiteren vorteilhaften Ausbildung des erfindungsgemäßen Verfahrens vorgesehen, daß die Veränderung der Öffnung erst dann erfolgt, wenn der Schwellwert für die Druckdifferenz eine definierte Zeitspanne erreicht, bzw. über- oder unterschritten wird.

Gemäß einer Ausbildung der Erfindung ist ein erster Schwellwert für die Druckdifferenz festgelegt, bis zu dessen Erreichen die Kraftfahrzeugöffnung vollständig geöffnet ist und/oder der Windabweiser in seiner ersten Stellung ist. Wird der erste Schwellwert überschritten, wird die Öffnung zumindest teilweise geschlossen bzw. der Windabweiser in eine zweite Stellung gebracht.

Desweiteren ist ein zweiter Schwellwert für die Druckdifferenz in der Fahrzeugkabine vorgesehen, der vorzugsweise unterhalb des ersten Schwellwertes zur Erzeugung einer Hysterese liegt und bei dessen Erreichen bzw. Unterschreiten, die Öffnung vollständig geöffnet und/oder der Windabweiser in seine erste Stellung gebracht wird.

Gemäß einer Weiterbildung der Erfindung können die strömungstechnischen Eingriffe bezüglich der Öffnung in Abhängigkeit der Fahrgeschwindigkeit und der auftretenden Druckdifferenz erfolgen.

Die erfindungsgemäße Vorrichtung zur Veränderung einer Öffnung einer Fahrzeugkabine weist mindestens eine Steuereinrichtung auf, in welcher unterschiedliche Fahrgeschwindigkeitsschwellwerte gespeichert sind.

Das die Fahrgeschwindigkeit des Kraftfahrzeuges repräsentierende Meßsignal ist dabei vorzugsweise das Ausgangssignal einer Einrichtung zur Ermittlung der Fahrgeschwindigkeit und/oder das Ausgangssignal einer Einrichtung zur Erfassung des in der Fahrzeugkabine vorherrschenden Druckes bzw. auftretender Druckdifferenzen.

Außerdem kann mindestens ein manuelles Bedienelement vorgesehen sein, mit dem die automatische Steuerung der Öffnung aktivierbar und/oder deaktivierbar und/oder übersteuerbar ist.

Vorzugsweise ist außerdem eine Anzeigeeinrichtung mit der Steuereinrichtung verbunden, auf der Informationen über die Öffnung als auch den Betätigungszustand des manuellen Bedienelementes darstellbar sind.

Nachfolgend wird die Erfindung anhand eines Ausführungsbeispiels näher beschrieben. Die zugehörigen Zeichnungen zeigen:
- Fig. 1: einen Ausschnitt eines Kraftfahrzeugdaches,
- Fig. 2: eine Ausführungsform der erfindungsgemäßen Vorrichtung zur Durchführung des erfindungsgemäßen Verfahrens und
- Fig. 3: eine weitere Ausführungsform der erfindungsgemäßen Vorrichtung zur Durchführung des erfindungsgemäßen Verfahrens.

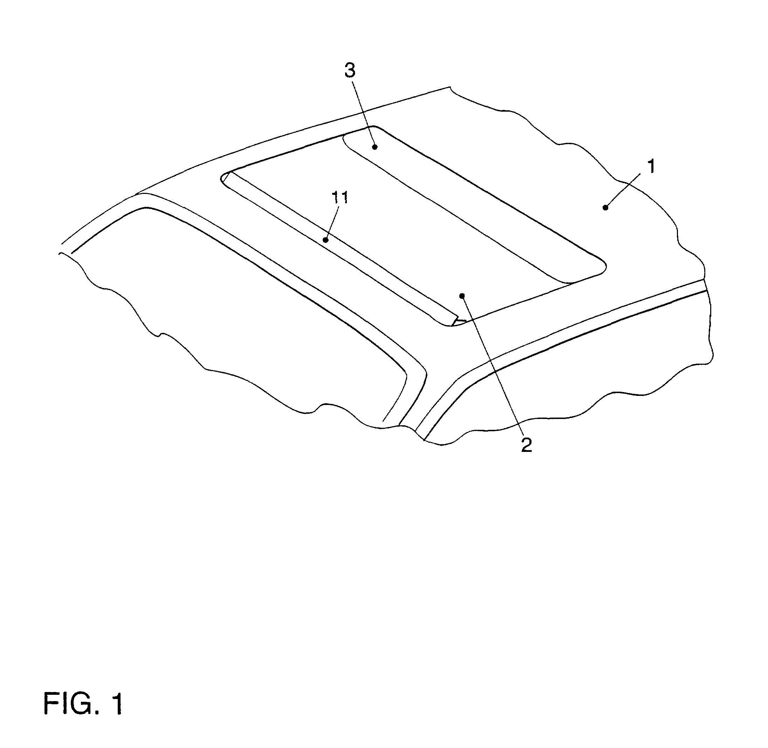

Fig. 1 zeigt einen Ausschnitt eines Kraftfahrzeugdaches 1 mit einer Dachöffnung 2. Die Dachöffnung 2 kann wahlweise in bekannter Weise mit einer Abdeckung 3 verschlossen werden. Die Abdeckung 3, beispielsweise als Schiebedach ausgebildet, wird von einem nicht dargestellten Stellmotor (Antriebseinrichtung) elektrisch betätigt und damit die Dachöffnung 2 geöffnet, ganz oder teilweise verschlossen. Dabei ist sowohl eine kontinuierliche als auch eine stufenweise Verstellung der Abdeckung 3 denkbar.

Desweiteren ist an der Dachöffnung 2 ein elektrisch in seiner Stellung veränderbarer Windabweiser 11 vorgesehen, der ebenfalls von einer nicht dargestellten Antriebseinrichtung ansteuerbar ist.

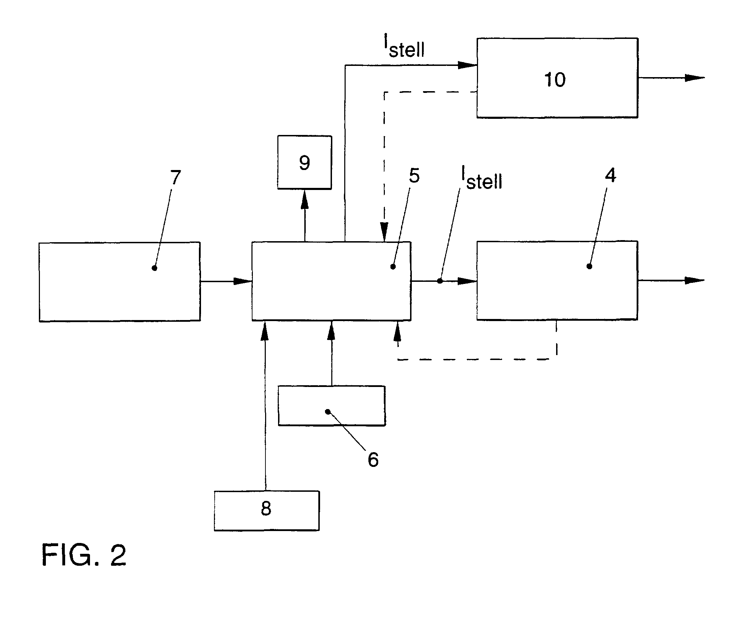

Gemäß Fig. 2 erfolgt die Verstellung der Abdeckung 3 und/oder des Windabweisers 11 und damit die Veränderung der Dachöffnung 2 des Kraftfahrzeuges über die elektrischen Antriebseinrichtungen 4 und 10, welche wiederum je eine Stellgröße Iₛₜₑₗₗ von einer Steuereinrichtung 5 erhalten. Die Steuereinrichtung 5 ist mit einer bereits für andere Zwecke verwendeten Einrichtung 6 zur Ermittlung der Fahrgeschwindigkeit verbunden.

Die Steuereinrichtung 5 wertet die Ausgangssignale der Einrichtung 6 aus und steuert entsprechend die Antriebseinrichtungen 4 und 10 und nimmt somit auf die Dachöffnung derart Einfluß, daß die der jeweiligen Fahrgeschwindigkeit in Abhängigkeit des in der Steuereinrichtung 5 abgelegten Steueralgorithmusses zugeordnete Stellung der Abdeckung 3 bzw. des Windabweisers 11 eingestellt wird.

Im nachfolgenden wird ein Beispiel für einen solchen Steueralgorithmus für die Abdeckung 3 angegeben.

| | **Fahrgeschwindigkeit /km/h):** | **Position der jeweiligen Dachöffnung** |
|---|---|---|
| Beschleunigung des Kraftfahrzeug es | 0 ≥ V < 30 | Dachöffnung max. geöffnet |
| | 30 ≥ V < 100 | Abdeckung fährt auf Komfortstellung (z.B.. 80 % Öffnung) |
| | 100 ≥ V ≤ Vmax; | Dachöffnung max. geöffnet |
| Verzögerung des Kraftfahrzeug es | V max abgebremst auf V ≥ 90 | Abdeckung fährt auf Komfortstellung (z.B.: 80 % Öffnung) |
| | 90 abgebremst auf V ≤ 20 | Öffnung max. geöffnet, 60 Sekunden, nach Unterschreitung von 20 km/h |

Insbesondere während Verzögerungsvorgängen im unteren Geschwindigkeitsbereich ist es sinnvoll, bei Erreichen des Fahrgeschwindigkeitsschwellwertes die Abdeckung 3 nicht sofort, sondern erst nach Verstreichen einer Zeitspanne anzusteuern, um zu verhindern, daß bei jedem Ampelstop oder im Stop-und Go-Verkehr auf Autobahnen, die Abdeckung 3 laufend geöffnet und geschlossen wird.

Über das manuelle Bedienelement 7 ist außerdem die Möglichkeit gegeben, daß durch manuelles Tätigwerden des Fahrers oder anderer Fahrzeuginsassen die Dachöffnung verändert werden kann, indem die automatische Steuerung deaktiviert wird.

Neben der Einrichtung 6 zur Ermittlung der Fahrgeschwindigkeit des Kraftfahrzeuges kann die erfindungsgemäße Vorrichtung außerdem einen oder mehrere Drucksensoren 8 aufweisen, die vorzugsweise in der Nähe der zu verändernden Öffnung angeordnet sind. Das Ausgangssignal des Drucksensors 8 wird dann ebenfalls der Steuereinrichtung 5 zugeleitet, die dann eine Stellgröße Iₛₜₑₗₗ für die Antriebseinrichtung 4 und/oder 10 in Abhängigkeit des Ausgangssignals sowohl der Einrichtung 6 als auch des Drucksensors 8 erzeugt.

Weist die erfindungsgemäße Vorrichtung zusätzlich noch eine Anzeigeeinrichtung 9 auf, sind auf dieser Betriebszustände der Dachöffnung 2 sowie Betätigungszustände des Bedienelements 7 wiedergebbar. Die Anzeigevorrichtung 9 kann sowohl optisch als auch akustisch ausgebildet sein.

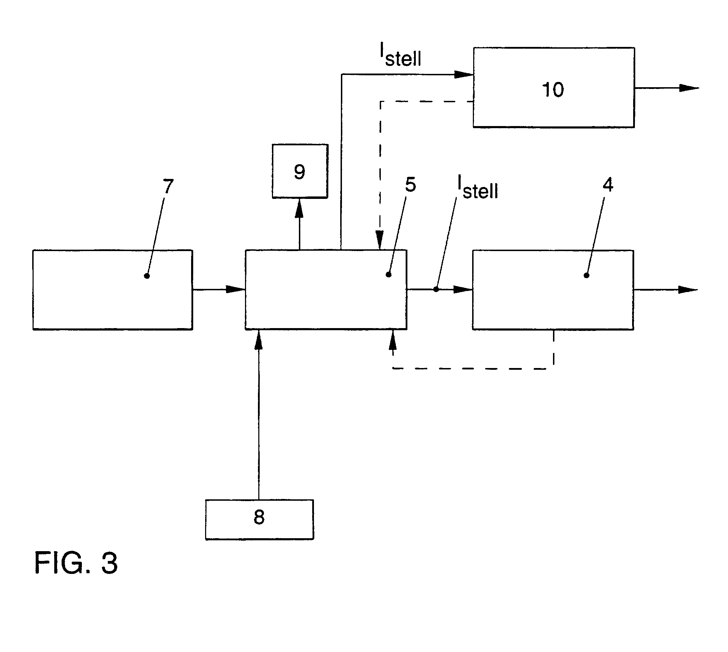

Gemäß Fig. 3 erfolgt die Verstellung der Abdeckung 3 und/oder des Windabweisers 11 und damit die Veränderung der Dachöffnung 2 des Kraftfahrzeuges über die elektrische Antriebseinrichtungen 4 und 10, welche wiederum zumindest eine Stellgröße Iₛₜₑₗₗ von einer Steuereinrichtung 5 erhalten. Die Steuereinrichtung 5 ist mit einer Einrichtung 8 zur Ermittlung einer in der Fahrgastzelle auftretenden Druckdifferenz verbunden.

Die Steuereinrichtung 5 wertet die Ausgangssignale der Einrichtung 8 aus und steuert entsprechend die Antriebseinrichtungen 4 und/oder 10 und nimmt somit auf die Dachöffnung derart Einfluß, daß die der jeweiligen auftretenden Druckdifferenz in Abhängigkeit der in der Steuereinrichtung 5 abgelegten Steueralgorithmen zugeordnete Stellung der Abdeckung 3 und/oder des Windabweisers 11 eingestellt wird.

Gemäß dem Ausführungsbeispiel ist ein erster Schwellwert für die Druckdifferenz bzw. Druckschwankung vorgesehen. Erreicht bzw. überschreitet die im Fahrzeuginnenraum auftretenden Druckdifferenz diesen Schwellwert wird die Abdeckung 3 mit Hilfe der elektrischen Antriebseinrichtung 4 in eine Komfortstellung gefahren und damit die Öffnung 2 teilweise geschlossen. Zusätzlich kann bei Überschreiten des Schwellwertes auch die Stellung des Windabweisers 11 entsprechend durch Erzeugung einer Stellgröße Iₛₜₑₗₗ für die Antriebseinrichtung 11 verändert werden. Für das Absinken der Druckdifferenz im Fahrzeuginnenraum ist ein zweiter Schwellwert vorgesehen, der sich vom ersten Schwellwert zur Bildung einer Hysterese unterscheidet. Wird dieser von der im Fahrzeuginnenraum auftretenden Druck erreicht bzw. unterschritten, wird die Dachöffnung 2 wieder vollständig geöffnet und/oder der Windabweiser fährt in seine entsprechende Stellung zurück.

Zur Vermeidung einer dauernden Verstellung der Dachöffnung 2 ist weiterhin eine definierte Verzögerungszeit in die Steuerung einbezogen, wobei die Abdeckung 3 und der Windabweiser 11 erst bei Erreichen eines Schwellwertes und Verstreichen dieser Verzögerungszeit angesteuert wird.

Über das manuelle Bedienelement 7 ist auch hier die Möglichkeit gegeben, daß durch manuelles Tätigwerden des Fahrers oder anderes Fahrzeuginsassen die Dachöffnung verändert werden kann, indem die automatische Steuerung deaktiviert wird.

Weist die erfindungsgemäße Vorrichtung zusätzlich noch eine Anzeigeeinrichtung 9 auf, sind auf dieser Betriebszustände der Dachöffnung 2 als auch Betätigungszustände des Bedienelementes 7 wiedergebbar. Die Anzeigeeinrichtung 9 kann sowohl optisch als auch akustisch ausgebildet sein.

## Patentansprüche

1. Verfahren zur automatischen Veränderung einer Öffnung (2) in der Außenhaut einer Fahrzeugkabine, insbesondere einer Öffnung im Dachbereich (1) eines Kraftfahrzeuges, wobei die Veränderung der Öffnung (2) in Abhängigkeit zumindest eines im wesentlichen die Fahrgeschwindigkeit repräsentierenden Meßsignals erfolgt, wobei die Größe der Öffnung verändert wird und wobei zumindest ein Fahrgeschwindigkeitsschwellwert vorgesehen ist, in dessen Abhängigkeit eine unterschiedliche Größe der Öffnung (2) eingestellt wird,
**dadurch gekennzeichnet, daß** für die Beschleunigungs- und Verzögerungsvorgänge des Kraftfahrzeuges unterschiedliche Fahrgeschwindigkeitsschwellwerte vorgesehen sind, um eine ständige Veränderung der Öffnung (2) bei Veränderungen der Fahrgeschwindigkeit zu vermeiden.

2. Verfahren nach Anspruch 1,
**dadurch gekennzeichnet, daß** während Beschleunigungsvorgängen des Kraftfahrzeuges bis zu einem ersten Fahrgeschwindigkeitsschwellwert die Öffnung (2) vollständig geöffnet wird und bei Erreichen bzw. Überschreiten des Fahrgeschwindigkeitsschwellwertes die Öffnung (2) zumindest teilweise geschlossen wird.

3. Verfahren nach Anspruch 2,
**dadurch gekennzeichnet, daß** ein zweiter Fahrgeschwindigkeitsschwellwert vorgesehen ist, der über dem ersten Fahrgeschwindigkeitsschwellwert liegt, wobei bei Erreichen bzw. Überschreiten des zweiten Fahrgeschwindigkeitsschwellwertes die Öffnung (2) vollständig geöffnet wird.

4. Verfahren nach einem der Ansprüche 1 bis 3,
**dadurch gekennzeichnet, daß** während Verzögerungsvorgängen bei Erreichen bzw. Unterschreiten eines dritten Fahrgeschwindigkeitsschwellwertes die Öffnung (2) zumindest teilweise geschlossen wird.

5. Verfahren nach Anspruch 4,
**dadurch gekennzeichnet, daß** bei Erreichen bzw. Unterschreiten einer vierten Fahrgeschwindigkeitsschwellwertes, der unterhalb des dritten Fahrgeschwindigkeitsschwellwertes liegt, die Öffnung (2) vollständig geöffnet wird.

6. Verfahren nach einem der Ansprüche 1 bis 5,
**dadurch gekennzeichnet, daß** eine Veränderung der Öffnung (2) zumindest bei Überschreiten bzw. Unterschreiten eines Fahrgeschwindigkeitsschwellwertes erst nach einem definierten Zeitablauf erfolgt.

7. Verfahren nach einem der Ansprüche 1 bis 6,
**dadurch gekennzeichnet, daß** die Veränderung der Öffnung (2) zusätzlich in Abhängigkeit des Druckes innerhalb der Fahrzeugkabine erfolgt.

8. Verfahren nach Anspruch 1,
**dadurch gekennzeichnet, daß** das im wesentlichen die Fahrgeschwindigkeit repräsentierende Meßsignal eine in der Fahrzeugkabine, insbesondere in der Nähe der Öffnung (2) auftretende Druckdifferenz ist.

9. Verfahren nach Anspruch 8,
**dadurch gekennzeichnet, daß** wenigstens ein Schwellwert für die Druckdifferenz vorgesehen ist, in dessen Abhängigkeit eine Veränderung der Öffnung (2) eingestellt wird.

10. Verfahren nach Anspruch 9,
**dadurch gekennzeichnet, daß** eine Veränderung der Öffnung (2) erst dann erfolgt, wenn die in der Fahrzeugkabine vorherrschende Druckdifferenz einer definierte Zeitspanne den Schwellwert erreicht bzw. über- oder unterschreitet.

11. Verfahren nach Anspruch 9 oder 10,
**dadurch gekennzeichnet, daß** zumindest zwei unterschiedliche Schwellwerte für die Druckdifferenz in der Fahrzeugkabine vorgesehen sind.

12. Verfahren nach einem der Ansprüche 9 bis 11,
**dadurch gekennzeichnet, daß** bis zu einem ersten Schwellwert für die Druckdifferenz in der Fahrzeugkabine die Öffnung (2) vollständig geöffnet wird und bei Erreichen bzw. Überschreiten des Schwellwertes die Öffnung (2) zumindest teilweise geschlossen wird.

13. Verfahren nach Anspruch 12,
**dadurch gekennzeichnet, daß** bei Erreichen bzw. Unterschreiten eines zweiten Schwellwertes für die Druckdifferenz in der Fahrzeugkabine die Öffnung (2) vollständig geöffnet wird.

14. Vorrichtung zur automatischen Veränderung einer Öffnung (2) in der Außenhaut einer Fahrzeugkabine, insbesondere einer Öffnung im Dachbereich (1) eines Kraftfahrzeuges, mit einer Antriebseinrichtung (4) für eine Abdeckung (3) und/oder mit einer Antriebseinrichtung (10) für einen Windabweiser (11) zum Verändern der Öffnung (2) und mit mindestens eine Steuereinrichtung (5) zur Erzeugung zumindest einer Stellgröße (Iₛₜₑₗₗ) für mindestens eine Antriebseinrichtung (4, 10), wobei die Steuereinrichtung mit mindestens einer Einrichtung (6, 8) zur Ermittlung eines im wesentlichen die Fahrgeschwindigkeit repräsentierenden Messsignals verbunden ist,
**dadurch gekennzeichnet, daß** in der Steuereinrichtung (5) für die Beschleunigungs- und Verzögerungsvorgänge des Kraftfahrzeuges unterschiedliche Fahrgeschwindigkeitsschwellwerte gespeichert sind, um eine ständige Veränderung der Öffnung (2) bei Veränderungen der Fahrgeschwindigkeit zu vermeiden.

15. Vorrichtung nach Anspruch 14,
**dadurch gekennzeichnet, daß** die Einrichtung (6) eine Einrichtung zur Ermittlung der Fahrgeschwindigkeit ist.

16. Vorrichtung nach Anspruch 14,
**dadurch gekennzeichnet, daß** die Einrichtung (8) eine Einrichtung zur Ermittlung von in einer Fahrzeugkabine, insbesondere in der Nähe der Öffnung (2), auftretenden Druckdifferenzen ist.

17. Vorrichtung nach einem der Ansprüche 14 bis 16,
**dadurch gekennzeichnet, daß** ein manuelles Bedienelement (7) vorgesehen ist, mit dem die automatische Steuerung der Öffnung (2) aktivierbar und/oder deaktivierbar und/oder übersteuerbar ist.

18. Vorrichtung nach einem der Ansprüche 14 bis 17,
**dadurch gekennzeichnet, daß** eine Anzeigeeinrichtung (9) vorgesehen ist, mittels der Informationen über die Veränderung der Öffnung (2) und/oder den Betätigungszustand des manuellen Bedienelementes (7) anzeigbar sind.

## Claims

1. Method for automatically changing an opening (2) in the skin of a vehicle compartment, in particular an opening in the roof region (1) of a motor vehicle, the changing of the opening (2) taking place as a function of at least one measurement signal which essentially represents the driving speed, the size of the opening being changed and at least one driving-speed threshold value being provided, as a function of which a different size of the opening (2) is set, **characterized in that** different driving-speed threshold values are provided for the acceleration and deceleration processes of the motor vehicle in order to avoid a continuous changing of the opening (2) as the driving speed changes.

2. Method according to Claim 1, **characterized in that** the opening (2) is completely opened during acceleration processes of the motor vehicle up to a first driving-speed threshold value, and the opening (2) is at least partially closed when the driving-speed threshold value is reached or exceeded.

3. Method according to Claim 2, **characterized in that** a second driving-speed threshold value which lies above the first driving-speed threshold value is provided, the opening (2) being completely opened when the second driving-speed threshold value is reached or exceeded.

4. Method according to one of Claims 1 to 3, **characterized in that**, during deceleration processes, the opening (2) is at least partially closed when a third driving-speed threshold value is reached or fallen short of.

5. Method according to Claim 4, **characterized in that** the opening (2) is completely opened when a fourth driving-speed threshold value which lies below the third driving-speed threshold value is reached or fallen short of.

6. Method according to one of Claims 1 to 5, **characterized in that** a changing of the opening (2) at least when a driving-speed threshold value is exceeded or fallen short of takes place only after a defined time lapse.

7. Method according to one of Claims 1 to 6, **characterized in that** the changing of the opening (2) takes place in addition as a function of the pressure within the vehicle compartment.

8. Method according to Claim 1, **characterized in that** the measurement signal essentially representing the driving speed is a difference in pressure which occurs in the vehicle compartment, in particular in the vicinity of the opening (2).

9. Method according to Claim 8, **characterized in that** at least one threshold value is provided for the difference in pressure, as a function of which value a changing of the opening (2) is set.

10. Method according to Claim 9, **characterized in that** a changing of the opening (2) takes place only if the difference in pressure prevailing in the vehicle compartment reaches or exceeds or falls short of the threshold value for a defined period of time.

11. Method according to Claim 9 or 10, **characterized in that** at least two different threshold values for the difference in pressure in the vehicle compartment are provided.

12. Method according to one of Claims 9 to 11, **characterized in that** the opening (2) is completely opened up to a first threshold value for the difference in pressure in the vehicle compartment, and the opening (2) is at least partially closed when the threshold value is reached or exceeded.

13. Method according to Claim 12, **characterized in that** the opening (2) is completely opened when a second threshold value for the difference in pressure in the vehicle compartment is reached or fallen short of.

14. Device for automatically changing an opening (2) in the skin of a vehicle compartment, in particular an opening in the roof region (1) of a motor vehicle, having a driving device (4) for a covering (3) and/or having a driving device (10) for a draught deflector (11) for changing the opening (2), and having at least one control device (5) for producing at least one actuating variable (I_{act}) for at least one driving device (4, 10), the control device being connected to a at least one device (6, 8) for determining a measurement signal essentially representing the driving speed, **characterized in that** different driving-speed threshold values are stored in the control device (5) for the acceleration and deceleration processes of the motor vehicle, in order to avoid a continuous changing of the opening (2) as the driving speed changes.

15. Device according to Claim 14, **characterized in that** the device (6) is a device for determining the driving speed.

16. Device according to Claim 14, **characterized in that** the device (8) is a device for determining differences in pressure occurring in the vehicle compartment, in particular in the vicinity of the opening (2).

17. Device according to one of Claims 14 to 16, **characterized in that** a manual operating element (7) is provided which can be used to activate and/or deactivate and/or override the automatic control of the opening (2).

18. Device according to one of Claims 14 to 17, **characterized in that** a display device (9) is provided which can be used to display information about the changing of the opening (2) and/or the actuating state of the manual operating element (7).

## Revendications

1. Procédé de modification automatique d'une ouverture (2) dans le revêtement extérieur d'une cabine de véhicule, notamment d'une ouverture au niveau du toit (1) d'un véhicule automobile, la modification de l'ouverture (2) ayant lieu en fonction d'au moins un signal de mesure représentant sensiblement la vitesse de circulation, la dimension de l'ouverture étant modifiée, et étant prévue au moins une valeur seuil de vitesse de circulation, en fonction de laquelle une dimension différente de l'ouverture (2) est réglée, **caractérisé en ce qu'**il est prévu, pour les processus d'accélération et de ralentissement du véhicule automobile, différentes valeurs seuils de vitesse de circulation pour éviter une modification constante de l'ouverture (2) lors de modifications de la vitesse de circulation.

2. Procédé selon la revendication 1, **caractérisé en ce que**, pendant les processus d'accélération du véhicule automobile jusqu'à une première valeur seuil de vitesse de circulation, l'ouverture (2) s'ouvre complètement et se ferme du moins partiellement en cas d'atteinte ou de dépassement de la valeur seuil de vitesse de circulation.

3. Procédé selon la revendication 2, **caractérisé en ce qu'**il est prévu une deuxième valeur seuil de vitesse de circulation qui se situe au-dessus de la première valeur seuil de vitesse de circulation, l'ouverture (2) s'ouvrant complètement en cas d'atteinte ou de dépassement de la deuxième valeur seuil de vitesse de circulation.

4. Procédé selon l'une quelconque des revendications 1 à 3, **caractérisé en ce que**, pendant les processus de ralentissement, en cas d'atteinte ou de sous-dépassement d'une troisième valeur seuil de vitesse de circulation, l'ouverture (2) se ferme du moins partiellement.

5. Procédé selon la revendication 4, **caractérisé en ce que**, en cas d'atteinte ou de sous-dépassement d'une quatrième valeur seuil de vitesse de circulation, qui se situe en dessous de la troisième valeur seuil de vitesse de circulation, l'ouverture (2) s'ouvre complètement.

6. Procédé selon l'une quelconque des revendications 1 à 5, **caractérisé en ce qu'**une modification de l'ouverture (2), au moins en cas de dépassement ou de sous-dépassement d'une valeur seuil de vitesse de circulation, n'a lieu qu'une fois qu'un temps défini s'est écoulé.

7. Procédé selon l'une quelconque des revendications 1 à 6, **caractérisé en ce que** la modification de l'ouverture (2) a lieu en plus en fonction de la pression à l'intérieur de la cabine du véhicule.

8. Procédé selon la revendication 1, **caractérisé en ce que** le signal de mesure représentant sensiblement la vitesse de circulation est une différence de pression survenant dans la cabine du véhicule, notamment à proximité de l'ouverture (2).

9. Procédé selon la revendication 8, **caractérisé en ce qu'**il est prévu pour la différence de pression au moins une valeur seuil en fonction de laquelle est réglée une modification de l'ouverture (2).

10. Procédé selon la revendication 9, **caractérisé en ce qu'**une modification de l'ouverture (2) n'a lieu que lorsque la différence de pression régnant préalablement dans la cabine du véhicule pendant un temps défini atteint ou dépasse ou sous-dépasse la valeur seuil.

11. Procédé selon la revendication 9 ou 10, **caractérisé en ce qu'**il est prévu au moins deux valeurs seuils différentes pour la différence de pression dans la cabine du véhicule.

12. Procédé selon l'une quelconque des revendications 9 à 11, **caractérisé en ce que**, jusqu'à une première valeur seuil pour la différence de pression dans la cabine du véhicule, l'ouverture (2) s'ouvre complètement et qu'en cas d'atteinte ou de dépassement de la valeur seuil, l'ouverture (2) se ferme du moins partiellement.

13. Procédé selon la revendications 12, **caractérisé en ce qu'**en cas d'atteinte ou de sous-dépassement d'une deuxième valeur seuil pour la différence de pression dans la cabine du véhicule, l'ouverture (2) s'ouvre complètement.

14. Dispositif de modification automatique d'une ouverture (2) dans le revêtement extérieur d'une cabine de véhicule, notamment d'une ouverture au niveau du toit (1) d'un véhicule automobile, à l'aide d'un dispositif d'entraînement (4) pour un recouvrement (3) et/ou d'un dispositif d'entraînement (10) pour un coupe-vent (11) pour modifier l'ouverture (2) et d'au moins un dispositif de commande (5) servant à générer au moins une grandeur de réglage (I_{régl}) pour au moins un dispositif d'entraînement (4, 10), le dispositif de commande étant relié à au moins un dispositif (6, 8) servant à enregistrer un signal de mesure représentant sensiblement la vitesse de circulation, **caractérisé en ce que**, dans le dispositif de commande (5) pour les processus d'accélération et de ralentissement du véhicule automobile, différentes valeurs seuils de vitesse de circulation sont mémorisées afin d'éviter une modification constante de l'ouverture (2) lors de modifications de la vitesse de circulation.

15. Dispositif selon la revendication 14, **caractérisé en ce que** le dispositif (6) est un dispositif d'enregistrement de la vitesse de circulation.

16. Dispositif selon la revendication 14, **caractérisé en ce que** le dispositif (8) est un dispositif d'enregistrement de différences de pression survenant dans une cabine de véhicule, notamment à proximité de l'ouverture (2).

17. Dispositif selon l'une quelconque des revendications 14 à 16, **caractérisé en ce qu'**il est prévu un élément de manoeuvre manuel (7) qui permet d'activer et/ou de désactiver et/ou de contrôler la commande automatique de l'ouverture (2).

18. Dispositif selon l'une quelconque des revendications 14 à 17, **caractérisé en ce qu'**il est prévu un dispositif d'affichage (9) au moyen duquel des informations sur la modification de l'ouverture (2) et/ou l'état d'actionnement de l'élément de manoeuvre manuel (7) peuvent être affichées.
